# EUROPEAN PATENT SPECIFICATION

(11) **EP 3 065 948 B1**
(45) Date of publication and mention of the grant of the patent: **10.01.2018**
(21) Application number: 14802756.8
(22) Date of filing: 06.11.2014
(51) Int. Cl.: B32B 27/06, B32B 27/18, B32B 27/30, B32B 27/40, B32B 37/15, B32B 27/08

(54) **CO-EXTRUSION OF RHEOLOGICALLY MISMATCHED POLYMERS**
KOEXTRUSION VON RHEOLOGISCH UNTERSCHIEDLICHEN POLYMEREN
CO-EXTRUSION DE POLYMÈRES RHÉOLOGIQUEMENT NON APPARIÉS

(30) Priority: 08.11.2013 US 201361901482 P
(43) Date of publication of application: 14.09.2016
(73) Proprietor: Lubrizol Advanced Materials, Inc., Cleveland, OH 44141-3247 (US); CASE WESTERN RESERVE UNIVERSITY, Cleveland, OH 44106-7015 (US)
(72) Inventor: MAIA, Joao M., Shaker Heights, Ohio 44122 (US); HUANG, Rongzhi, Shaker Heights, Ohio 44120 (US); COX, John M., Cleveland, Ohio 44147-3247 (US)
(74) Representative: Bradley, Josephine Mary
(86) International application number: PCT/US2014/064220
(87) International publication number: WO 2015/069826

(56) References cited:
- WO-A1-2009/014849
- WO-A1-2011/115961
- US-A1- 2011 256 332
- Michael S Fulmer: "Introduction to Lubricants and Additives for Polymer Compounds", , 24 October 2000 (2000-10-24), XP055161194, Retrieved from the Internet: URL:http://www.struktol.com/pdfs/lubricant s.pdf [retrieved on 2015-01-12]

## Description

### FIELD OF THE INVENTION

Traditionally, the rheological properties, including for example, the viscosities, of two or more polymers that are to be co-extruded must be well matched in order to obtain acceptable multilayer structures. This limitation severely narrows the processing window for such co-extrusions as well as the combinations of polymers that can be used in such co-extrusions. The technology disclosed herein removes these limitations and allows for the co-extrusion of a wider variety of combinations of polymers, even when the rheological properties of the polymers to be used are significantly different, while still providing acceptable multilayer structures. Stated another way, the technology disclosed herein improves the multilayer structures that can be obtained when processing two or more polymer materials with significantly different rheological properties via layer-multiplying co-extrusion.

### BACKGROUND

Co-extrusion is the process of simultaneously extruding two or more identical or different materials in a feedblock or die to form a product with multilayered structure and outstanding properties not possible to achieve with either materials alone. Multilayered materials are often used as gas barrier, dielectrics and optics.

While current standard co-extrusion technology is limited to produce several layers, layer-multiplying co-extrusion or "forced assembly" makes it possible to fabricate films that incorporate many more layers, and even tens to thousands of polymer nanolayers. However, layer-multiplying co-extrusion is limited in that only materials with the same or very similar rheology can be successfully processed. When materials with different rheology are used the resulting extrudate exhibits layer non-uniformity, viscous encapsulation, interfacial instability, elastic recoil, and/or elastic instabilities.

Viscous encapsulation is a phenomenon in which the less viscous polymer will tend to wrap up/encapsulate the more viscous polymer when they flow through a die. Interfacial and/or interlayer instabilities cause wave-like patterns to develop, i.e., there are thickness changes at the interface between the layers of the two materials. Elastic instabilities, such as elastic layer rearrangement, occur when elastic polymers flow through non-radially symmetric geometries producing secondary flows, which drive rearrangement of the layer thicknesses. Any of these problems can result in the extrudate being less effective and often unacceptable for the end use in mind. The benefits in performance of the multilayer extrudate are compromised by these problems.

Consequently, uniform multilayer structures currently can only be achieved for a narrow range of materials, where the materials being layers have the same or very similar rheological properties

Thus, there is a need to broaden this processing window and enable more rheologically mismatched polymers to be successfully processed by layer multiplying co-extrusion. US 2011/256332 discloses a polymer extrudate comprising two extruded polymer layers made of different polymer compositions, one of the layers comprising an external lubricant.

WO 2011/115961 discloses an extruded multilayer polymeric material comprising alternating microlayers.

### SUMMARY

This technology relates to the co-extrusion of two or more polymer materials where at least two of the polymer materials do not have similar rheological properties. The technology allows for the co-extrusion of such materials into multilayer and/or microlayer extrudates and/or flows, such as films, where an acceptable multilayer structure can still be obtained despite the difference in rheological properties.

The disclosed technology provides a polymer extrudate and/or flow comprising a plurality of extruded polymer layers comprising a plurality of alternating layers of at least one first polymer material having a first set of rheological properties and a second polymer material having a second set of rheological properties different than the first set of rheological properties, where the at least one of the first polymer material and the second polymer material comprises an external lubricant, and wherein the first and second sets of rheological properties comprise one or more of the following properties: (a) the dynamic moduli measured by a rotational rheometer (see additional detail in the section below); (b) the shear viscosity measured by both rotational and capillary rheometer (see additional detail in the section below); and (c) the first and second normal-stress differences measured by rotational rheometer. The terms polymer extrudate and polymer flow may be used interchangeably herein. In some embodiments, the external lubricant is added to both polymers.

The technology further provides the extrudates described here wherein the first and second sets of rheological properties are different in one or more of the following ways: (a) the dynamic moduli of the first polymer material and the second polymer material are different, in that the ratio of the dynamic moduli of the first polymer material to the dynamic moduli of the second polymer material is at least 2:1, or even at least 3:1 or even at least 5:1, or even at least 10:1, and can be up to as much as 100:1 or 20:1 or even 10:1; and/or (b) the shear viscosity of the first polymer material and the second polymer material are different, in that the ratio of the shear viscosity of the first polymer material to the shear viscosity of the second polymer material is at least 2:1, or even at least 3:1 or even at least 5:1, or even at least 10:1, and can be up to as much as 100:1 or 20:1 or even 10:1; and/or (c) the ratio of the first and second normal-stress differences of the first polymer material to the first and second normal-stress differences of the second polymer material is at least 2:1, or even at least 3:1 or even at least 5:1, or even at least 10:1, and can be up to as much as 100:1 or 20:1 or even 10:1.

The technology further provides the extrudates described here wherein the first polymer material has: (a) a dynamic moduli from 100 to 300,000 Pa; (b) a shear viscosity from 300 to 10,000 Pa-sec; and wherein the second polymer material has: (a) a dynamic moduli from 1 to 80,000 Pa; (b) a shear viscosity from 100 to 1,000 Pa-sec.

The technology further provides the extrudates described here wherein the first polymer material has: (a) a dynamic moduli from 150 to 100,000 Pa; (b) a shear viscosity from 1,100 to 2,500 Pa-sec; and wherein the second polymer material has: (a) a dynamic moduli from 30 to 80,000 Pa; (b) a shear viscosity from 800 to 850 Pa-sec.

The technology further provides the extrudates described here wherein the external lubricant comprises hydrocarbon waxes, amide waxes, polyethylene waxes, oxidized low and high density polyethylene waxes, metal stearates, or any combination thereof.

The technology further provides the extrudates described here wherein the external lubricant comprises unsaturated primary amide derived from erucic acid, acomplex oleochemical mixture containing mono and di amides and metal soap, or any combination thereof.

The technology further provides the extrudates described here wherein the first polymer material comprises a polystyrene and the second polymer material comprises a poly(methyl methacrylate).

The technology further provides the extrudates described here wherein the first polymer material comprises a thermoplastic polyurethane prepared from a diisocyanate and chain extender and the second polymer material comprises a thermoplastic polyurethane prepared from a diisocyanate, a chain extender, and a hydroxyl terminated intermediate.

The technology further provides the extrudates described here wherein the first polymer material and/or the second polymer material comprises at least one rigid thermoplastic polyurethane, wherein said rigid thermoplastic polyurethane has the following properties: (i) a Shore D durometer of at least 80, as measured according to ASTM D-2240; and/or (ii) a soft segment content of less than 5 weight percent.

The technology further provides the extrudates described here wherein the first polymer material and/or the second polymer material comprises at least one rigid thermoplastic polyurethane, wherein said rigid thermoplastic polyurethane is made by reacting at least one polyisocyanate with at least one diol chain extender.

The technology further provides a multilayer barrier film comprising: a) a bulk layer; and b) a multilayer and/or microlayer section comprising any of the extrudates described herein. The technology further provides the multilayer barrier film described herein where the film is a barrier for oxygen, for styrene vapors, or a combination thereof.

The technology further provides the multilayer barrier film described herein wherein the multilayer and/or microlayer section comprises between 2 and 2000, 10 and 2000 layers, or even from 10 to 1000, or from 10 to 200 or even from 2 to 100, or from 10 to 100.

The technology further provides the multilayer barrier film described herein wherein the multilayer film comprises a second bulk layer, and said multilayer and/or microlayer section is positioned between said bulk layer and said second bulk layer.

The technology further provides the multilayer barrier film described herein wherein the bulk layer comprises one or more materials selected from the group consisting of olefinic polymer or copolymer, polyester or copolyester, styrenic polymer or copolymer, amidic polymer or copolymer, and polycarbonate.

The technology further provides a method of making the extrudates and barrier films described herein wherein said method comprises the steps of: I. coextruding a plurality of adjoining layers; and II. merging said layers to form a multilayer film; wherein the plurality of adjoining layers comprises at least one layer comprising at least a first polymer material having a first set of rheological properties and at least one layer comprising a second polymer material having a second set of rheological properties different than the first set of rheological properties; and wherein the at least one of the first polymer material and the second polymer material comprises an external lubricant.

### DETAILED DESCRIPTION

Various preferred features and embodiments will be described below by way of non-limiting illustration.

As noted above, current technology for layer-multiplying co-extrusion is limited to materials with the same or very similar rheology which can be successfully processed. When materials with different rheology are used, the resulting extrudate exhibits layer non-uniformity, viscous encapsulation, interfacial instability, elastic recoil, and/or elastic instabilities.

In order to overcome these difficulties, both the viscous and elastic effects must be considered when processing multilayer polymer structures. While not wishing to be bound by theory, the technology described herein looks to eliminate the sources of instablility, like the second normal-stress difference through the use of an external lubricant.

Process simulation results show the progression of viscous encapsulation and elastic instabilities in particular are very sensitive to the magnitude of the second normal-stress difference. Furthermore, simulations at different amounts of wall friction show that slip above approximately 80% causes a significant decrease in both the shear stress and the second normal-stress differences at the wall. Consequently, the interface between the two layers gets progressively flatter. Thus, using an external lubricant that can reduce the amounts of wall friction and/or increase the wall slip which will reduce the magnitude of the second normal-stress difference, and so can be expected to reduce the viscous encapsulation and elastic instabilities seen when using layer-multiplying co-extrusion with materials having different rheological properties.

The technology described herein has found that a very effective way to decrease the wall friction and/or increase the wall slip, and so to reduce the magnitude of the second normal-stress difference, thus allowing the use of layer-multiplying co-extrusion with materials having different rheological properties, is to use external lubricants in the formulation. The low friction of the external lubricants minimizes most of the elastic deformations of the melts at the wall, dramatically weakening the interfacial and elastic instabilities in multilayer flow. Thus, external lubricants are shown to assist rheologically mismatched polymers to form uniform multilayer structures, especially for two layers with high viscosity and elasticity ratios.

It has now been found that the slipping nature of external lubricants can allow for the use of a wide range of material systems even where the two or more polymer materials used have a large viscoelasticity ratio, indicating the large difference in rheological properties. Due to the general immiscibility of external lubricants in polymer materials, the external lubricants can form an insulating layer between the melts and metal surfaces of the layer-multiplying co-extrusion processing equipment, reducing the second normal-stress differences caused by shear during processing in non-axisymmetric channels. Lubricating the boundary layer may also turn layer-multiplying co-extrusion into an energy-saving process by lowering both the processing temperature and the head pressure.

### The Extrudate

The polymer extrudate described herein includes a plurality of extruded polymer layers made up of alternating layers two different polymer materials, which are referred to herein as a first polymer material and a second polymer material, but which may include still further polymer materials as well. Each polymer material has a set of rheological properties, and the technology described herein allows for successful processing of the materials even when one or more of the rheological properties of the first polymer material are different from one or more of the rheological properties of the second polymer material. The described technology specifies that an external lubricant is added to and/or included in at least one of the polymer materials used. The external lubricant may be compounded into one or both (or even more than two were applicable) of the polymer materials used to prepare the extrudate. The external lubricant may also be added to the extruder and/or extruders at the time the extrudate is being prepared. In general, the external lubricant may be added at any time and by any means that results in it being present with the polymer materials forming the extrudate when they exit the die of the extruder.

The described technology relates to an extrudate, which may include any material that has been extruded through a die. The extradite described herein includes at least 3 layers of polymer materials, where the layers of polymer materials are alternating layers of the first polymer material and the second polymer materials. In other embodiments, more than two polymer materials may be used, and any arrangement of alternating layers may be used in the extrudate. In some embodiments, the extrudate includes at least 5 layers, even at least 7, 9, 11, 21, 50, or even 100 layers, up to 10,000, 5,000, 1,000, 500 or even 200 layers.

In some embodiments, the extrudate described herein is a film which includes at least 3 layers of polymer materials, where the layers of polymer materials are alternating layers of the first polymer material and the second polymer materials. In other embodiments, more than two polymer materials may be used, and any arrangement of alternating layers may be used in the film. In some embodiments, the film includes at least 5 layers, even at least 7, 9, 11, 21, 50, or even 100 layers, up to 10,000, 5,000, 1,000, 500 or even 200 layers.

The polymer materials useful in the present application are not overly limited so long as the two polymer materials have the differences in rheological properties described herein. In some embodiments, the polymer materials used here are one or more materials having a weight average molecular weight (Mw) of at least 5,000. The polymeric material may be an organic polymeric material. The polymer materials also include the combination of the described polymeric materials with at least one more material dispersed therein. The additional materials can be another polymeric or organic material or an inorganic material. Examples of such inorganic materials include inorganic fillers, such as glass, titanium dioxide and talc. Further, the inorganic material may be the form of particles, rods, fibers, plates etc.

Examples of polymer materials that may be used in the described technology as either the first polymer material or the second polymer materials, or a component of either thereof, include but are not limited to, polyethylene naphthalate and isomers thereof such as 2,6-, 1,4-, 1,5-, 2,7-, and 2,3-polyethylene naphthalate; polyalkylene terephthalates such as polyethylene terephthalate, polybutylene terephthalate, and poly-1,4-cyclohexanedimethylene terephthalate; polyimides such as polyacrylic imides; polyetherimides; styrenic polymers, such as atactic, isotactic and syndiotactic polystyrene, a-methyl-polystyrene, para-methyl-polystyrene; polycarbonates such as bisphenol-A-polycarbonate (PC); poly(meth)acrylates such as poly(isobutyl methacrylate), poly(propyl methacrylate), poly(ethyl methacrylate), poly(methyl methacrylate), poly(butyl acrylate) and poly(methyl acrylate) (the term "(meth)acrylate" is used herein to denote acrylate or methacrylate); cellulose derivatives such as ethyl cellulose, cellulose acetate, cellulose propionate, cellulose acetate butyrate, and cellulose nitrate; polyalkylene polymers such as polyethylene, polypropylene, polybutylene, polyisobutylene, and poly(4-methyl)pentene; fluorinated polymers such as perfluoroalkoxy resins, polytetrafluoroethylene, fluorinated ethylene-propylene copolymers, polyvinylidene fluoride, and polychlorotrifluoroethylene; chlorinated polymers such as polydichlorostyrene, polyvinylidene chloride and polyvinylchloride; polysulfones; polyethersulfones; polyacrylonitrile; polyamides; polyvinylacetate; polyetheramides. Copolymers can also be used and include, for example, styrene-acrylonitrile copolymer (SAN), containing between 10 and 50 wt %, preferably between 20 and 40 wt %, acrylonitrile, styrene-ethylene copolymer; and poly(ethylene-1,4-cyclohexylenedimethylene terephthalate) (PETG). In addition, each individual layer may include blends of two or more of the above-described polymers or copolymers. Preferred polymeric materials include poly(methyl methacrylate) (PMMA) and polystyrene (PS).

In an embodiment, the extrudate is prepared by multilayer and/or microlayer coextrusion of two or more polymer materials. Nanolayers are comprised of alternating layers of two or more components with individual layer thickness ranging from the microscale to the nanoscale. The details for employing such a co-extrusion apparatus can be found in U.S. Pat. No. 6,582,807.

In some embodiments, the multilayer extrudate of the present invention has at least 30 layers, or from 50 to 10,000 layers, including any number of layers within that range. In some embodiments, the multilayer structure is in the form of film. By altering the relative flow rates or the number of layers, while keeping the film thickness constant, the individual layer thickness can be controlled.

In some embodiments, the multilayer extrudate, including when the extrudate is a film, has an overall thickness ranging from 10 nanometers to 1000 mils, or even from 0.1 mils to 125 mils, and any increments therein. Further, the multilayer extrudate may be formed into a number of articles. The structures may be formed by coextrusion techniques initially into films, which may then be post formed. Such post forming operations may include thermoforming, vacuum forming, or pressure forming. Further, through the use of forming dies, the multilayer extrudate may be formed into a variety of useful shapes including profiles, tubes and the like. It is to be appreciated that the multilayer extrudate can be stretched or compressed to change the thickness and thus the emitted wavelength of the multilayer extrudate.

In some embodiments, the technology described herein relates to packaging materials of a type employing flexible, polymeric films. More specifically, the described technology pertains to multilayer films including a plurality of adjoining layers, the layers including alternating layers of at least two polymer materials where the polymer materials are different from one another in regards to at least one rheological property.

In some embodiments, the extrudates described herein are oxygen barrier films that may be used for food and non-food end-use applications. In some embodiments, the technology is used in vertical form/fill/seal (VFFS) packaging. The VFFS process is known to those of skill in the art, and described for example in U.S. Pat. Nos. 4,506,494 (Shimoyama et al.), 4,589,247 (Tsuruta et al), 4,656,818 (Shimoyama et al.), 4,768,411 (Su), 4,808,010 (Vogan), and 5,467,581 (Everette).

The multilayer oxygen barrier film described herein includes a bulk layer, and a multilayer and/or microlayer section that includes the polymer extrudate described herein. Here, the extrudate may be described as a plurality of adjoining layers including the at least two polymer materials described herein.

In such embodiments, the bulk layer is not overly limited. In some embodiments, the bulk layer includes one or more olefinic polymers or copolymers, polyesters or copolyesters, styrenic polymers or copolymers, amidic polymers or copolymers, polycarbonates, or any combination thereof. Within the family of olefinic polymers and copolymers, various polyethylene homopolymers and copolymers may be used, as well as polypropylene homopolymers and copolymers (e.g., propylene/ethylene copolymer). Polyethylene homopolymers may include low density polyethylene (LDPE) and high density polyethylene (HDPE). Suitable polyethylene copolymers may include ionomer, ethylene/vinyl acetate copolymer (EVA), ethylene/vinyl alcohol copolymer (EVOH), and ethylene/alpha-olefin copolymer.

The ratio of the thickness of any of the layers to the thickness of the bulk layer may range from 1:1.1 to 1:30,000, from 1:2 to 1:30,000, from 1:5 to 1:20,000, 1:10 to 1:10,000, 1:20 to 1:5,000, 1:30 to 1:1,000, 1:50 to 1:500, or any range of ratios in between the foregoing ranges of ratios. Generally, the thickness M of the layers will be less than the thickness D of the bulk layers. The thinner that such layers are relative to the bulk layer, the more of such layers that can be included in a multilayer film, for a given overall film thickness. Layer thickness M from each layer can be of any suitable thickness. As an example, without being limited thereto, M can generally range from 0.0001 to 10 mils (1 mil=0.001 inch). Thickness D can be of any suitable thickness. As an example, without being limited thereto, D will generally range from 0.15 to 20 mils. The ratio of M:D may in some embodiments range from 1:1.1 to 1:8. Thickness M may be the same or different among the various layers to achieve a desired distribution of layer thicknesses in the multilayer and/or microlayer section of the resultant film. Similarly, thickness D may be the same or different among the one or more bulk layers that may be present, to achieve a desired distribution of layer thicknesses in the bulk-layer section(s) of the resultant film. The same thickness ratio range may apply to each of the multilayer and/or microlayer relative any of the other bulk layers in film. Thus, for example, each of the multilayer and/or microlayer may have a thickness ranging from 0.0001 to 0.1 mils, while each of the bulk layers may have a thickness ranging from 0.15 to 19.5 mils.

As used herein, "Oxygen barrier film" herein can mean to a film having an oxygen permeability of less than 500 cm³ O₂/m² dayatmosphere (tested at 1 mil thick and at 25C. according to ASTM D3985), such as less than 100, less than 50 and less than 25 cm³ O₂/m² dayatmosphere such as less than 10, less than 5, and less than 1 cm³ O₂/m² dayatmosphere. Examples of such polymeric materials are ethylene/vinyl alcohol copolymer (EVOH), polyvinylidene dichloride (PVDC), vinylidene chloride/methyl acrylate copolymer, polyamide, amorphous polyamide and polyester.

The repeating sequence of the layers of the extrudate described herein may be expressed as "A" and "B" layers of the extrudate, where A represents the first polymer material and B represents the second polymer material and a structure [A/B/] ₙ represents a film having n layers made up of alternating layers of A and B. In some embodiments, only layers of A and B are present, that is, there are no intervening layers. Alternatively, one or more intervening layers may be present between the "A" and "B" layers, e.g., a layer "C" including a third polymer materials different from those in the "A" and "B" layers, such that the repeating sequence of layers has the structure [A/B/C/]ₙ, [A/C/B/]ₙ, etc. Other sequences are, of course, also possible, such as [A/A/B/]ₙ, [A/B/B/]ₙ, etc. [A/B/]ₙ (or [A/B/C/]ₙ, [A/A/B/]ₙ, [A/B/B]ₙ, etc.) sequence may be repeated as many times as necessary to obtain a desired number of multilayers and/or microlayers in the extrudate and/or micro layer section of the film.

In an alternative embodiment, the multilayered and/or microlayered extrudates do not follow a repeating pattern, since the layers can be stacked in any arrangement desired. Thus, randomly layered or more complex repeated structures are also possible. Further, as noted above, the relative thickness of each of the layers may all be uniform, or may vary, in consistent or even random ways, depending on the multilayer and/or microlayer structure desired.

In still further embodiments, a film may have a pair of multilayer and/or microlayer, one present on both of the opposing outer layers of the film. To make such a film, a second multilayer and/or microlayer section may be added, such that one multilayer and/or microlayer section is present on one side of the bulk layer of the film, and the multilayer and/or microlayer section is present on the other side of the bulk layer of the film.

Additional materials that can be incorporated into one or both of the outer layers of the film, and in other layers of the film as appropriate, include antiblock agents, antifog agents, fillers, pigments, dyestuffs, antioxidants, stabilizers, plasticizers, fire retardants, UV absorbers, etc. Additional materials, including polymeric materials or other organic or inorganic additives, can be added to layers A and E as needed.

In general, the film can have any total thickness desired, and each layer and microlayer can have any thickness desired, within the parameters disclosed in this application, so long as the film provides the desired properties for the particular packaging operation in which the film is used. Typical total thicknesses for the film of the invention are from 0.5 mils to 15 mils, such as 1 mil to 12 mils, such as 2 mils to 10 mils, 3 mils to 8 mils, and 4 mils to 6 mils.

The technology further provides a multilayer barrier film comprising: a) a bulk layer; and b) a multilayer and/or microlayer section comprising any of the extrudates described herein. In some embodiments, the multilayer barrier film described herein blocks one or more gases. In other embodiments, the film is a barrier for oxygen. In other embodiments, the film is a barrier to styrene vapors, particularly those that would come off of cured in place sewer and pipe liners from the materials used in the manufacture and installation of such sewer and pipe liners. Using the multilayer barrier film described herein as part of a cured in place sewer liner would help to control unwanted escape of gases, such as but not limited to styrene vapors.

In some embodiments, the multilayer and/or microlayer section of the multilayer barrier film described herein includes between 10 and 2000 layer, or even from 10 to 1000, or from 10 to 200 or even from 10 to 100.

In some embodiments, the multilayer film comprises a second bulk layer, and the multilayer and/or microlayer section is positioned between said bulk layer and said second bulk layer. In some embodiments, the bulk layer comprises one or more materials selected from the group consisting of olefinic polymer or copolymer, polyester or copolyester, styrenic polymer or copolymer, amidic polymer or copolymer, and polycarbonate.

### The Polymere Materials

The technology described herein utilizes a first polymer material having a first set of rheological properties and a second polymer material having a second set of rheological properties different than the first set of rheological properties. Suitable polymer materials for use as the first polymer material and the second polymer material are not overly limited so long as they are rheologically different. Still further polymer materials, forming other layers may of course also be present.

By rheologically different, it is meant that at least one rheological property of the first polymer material is different from the corresponding rheological property of the second polymer material. By different, as used herein in regards to rheological properties, it is meant that the property in question, as measured in the polymer materials to be used, are not so close to each that they would be considered rheologically well matched and/or similar enough to allow for traditional multilayer co-extrusion processing.

In some embodiments, the rheological properties considered are: (i) the dynamic moduli of the first and second polymer materials, which may be measured by a rotational rheometer; (ii) the shear viscosity of the first and second polymer materials, which may be measured by a capillary rheometer; or (iii) both the dynamic moduli and the shear viscosity.

In some embodiments, the dynamic moduli of the first and second polymer materials is considered to be different when the ratio of the dynamic moduli of the first polymer material to the dynamic moduli of the second polymer material is not 1:1, and in other embodiments if it is at least 2:1, 3:1, 5:1, or even 10:1.

In some embodiments, the shear viscosity of the first and second polymer materials is considered to be different when the ratio of the shear viscosity of the first polymer material to the dynamic moduli of the second polymer material is not 1:1, and in other embodiments if it is at least 2:1, 3:1, 5:1, or even 10:1.

In still further embodiments: (i) the first polymer material has a dynamic moduli from 100 to 300,000 Pa or from 150 to 100,000 Pa; (ii) the first polymer material has a shear viscosity from 300 to 10,000 Pa-s or from 1,100 to 2,500 Pa-s; (iii) the second polymer material has a dynamic moduli from 1 to 80,000 Pa or even 30 to 80,000 Pa; (iv) the second polymer material has a shear viscosity from 100 to 1,000 Pa-s or even 800 to 850 Pa-s.

In some embodiments, the first polymer material and/or the second polymer material may include polyolefin, polyester (e.g., PET and PETG), polystyrene, (e.g., modified styrenic polymer such as SEBS, SBS, etc.), polyamide homopolymer and copolymer (e.g., PA6, PA12, PA6/12, etc.), polycarbonate, cyclic olefin copolymer (COC), poly(lactic acid) (PLA), poly(glycolic acid) (PGA), poly(methyl methacrylate) (PMMA), thermoplastic polyurethane (TPU) including either rigid and/or non-rigid TPU, or any combination thereof, including combinations or two or more of each type of material listed, so long as the materials are selected such that at least one rheological property of the first polymer material is different from the corresponding rheological property of the second polymer material, as described above.

Within the family of suitable polyolefins, various polyethylene homopolymers and copolymers may be used, as well as polypropylene homopolymers and copolymers (e.g., propylene/ethylene copolymer). Polyethylene homopolymers may include low density polyethylene (LDPE) and high density polyethylene (HDPE). Suitable polyethylene copolymers may include a wide variety of polymers, e.g., ionomer, ethylene/vinyl acetate copolymer (EVA), ethylene/vinyl alcohol copolymer (EVOH), and ethylene/alpha-olefin copolymer.

In some embodiments, the first and/or second polymer materials may include thermoplastic polymer or copolymer or a thermoplastic containing a thermoplastic polymer or copolymer. It may consist of a blend of polymers or copolymers, these possibly being compatibilized by modification, using grafting or using compatibilizers, so long as the materials are selected such that at least one rheological property of the first polymer material is different from the corresponding rheological property of the second polymer material, as described above.

In such embodiments, the thermoplastic can be chosen from polyolefins, polyamides, polyurethanes, polyesters, polycarbonates, polyacetals, acrylic and methacrylic polymers, styrene polymers, vinyl polymers, polymer and copolymer blends based on these polymers, and polyvinyl chloride.

By way of example of suitable thermoplastics, mention may be made of polylactones, such as poly(pivalolactone), poly(caprolactone) and polymers of the same family; polyurethanes obtained by the reaction between diisocyanates, such as 1,5-naphthalene diisocyanate, p-phenylene diisocyanate, m-phenylene diisocyanate, 2,4-toluene diisocyanate, 4,4'-diphenylmethane diisocyanate, 3,3'-dimethyl-4,4'-diphenylmethane diisocyanate, 3,3'-dimethyl-4,4'-biphe-nyl diisocyanate, 4,4'-biphenylisopropylidene diisocyanate, 3,3'-dimethyl-4,4'-diphenyl diisocyanate, 3,3'-dimethyl-4,4'-diphenylmeth-ane diisocyanate, 3,3'-dimethoxy-4,4'-biphenyl diisocyanate, dianisidine diisocyanate, toluidine diisocyanate, hexamethylene diisocyanate, 4,4'-diisocyanatodiphenylmethane and compounds of the same family and linear long-chain diols, such as poly(tetramethylene adipate), poly(ethylene adipate), poly(1,4-butylene adipate), poly(ethylene succinate), poly(2,3-butylene succinate), polyether diols and compounds of the same family; polycarbonates, such as poly(methane bis[4-phenyl]carbonate), poly(bis[4-phenyl]-1,1-ether carbonate), poly(diphenylmethane bis[4-phenyl]carbonate), poly(1,1-cyclohexane-bis[4-phenyl]carbonate) and polymers of the same family; polysulphones; polyethers; polyketones; polyamides, such as poly(4-aminobutyric acid), poly(hexamethylene adipamide), poly(6-aminohexanoic acid), poly(m-xylylene adipamide), poly(p-xylylene sebacamide), poly(2,2,2-trimethylhexamethylene terephthalamide), poly(metaphenylene isophthalamide), poly(p-phenylene terephthalamide) and polymers of the same family; polyesters, such as poly(ethylene azelate), poly(ethylene-1,5-naphthalate, poly(1,4-cyclohexanedimethylene terephthalate), poly(ethylene oxybenzoate), poly(para-hydroxybenzoate), poly(1,4-cyclohexylidene dimethylene terephthalate), poly(1,4-cyclohexylidene dimethylene terephthalate), polyethylene terephthalate, polybutylene terephthalate and polymers of the same family; poly(arylene oxides), such as poly(2,6-dimethyl-1,4-phenylene oxide), poly(2,6-diphenyl-1,4-phenylene oxide) and polymers of the same family; poly(arylene sulphides), such as poly(phenylene sulphide) and polymers of the same family; polyetherimides; vinyl polymers and their copolymers, such as polyvinyl acetate, polyvinyl alcohol and polyvinyl chloride; polyvinylbutyral, polyvinylidene chloride, ethylene/vinyl acetate copolymers and polymers of the same family; acrylic polymers, polyacrylates and their copolymers, such as polyethyl acrylate, poly(n-butyl acrylate), polymethyl methacrylate, polyethyl methacrylate, poly(n-butyl methacrylate), poly(n-propyl methacrylate), polyacrylamide, polyacrylonitrile, poly(acrylic acid), ethylene/acrylic acid copolymers, ethylene/vinyl alcohol copolymers, acrylonitrile copolymers, methyl methacrylate/styrene copolymers, ethylene/ethyl acrylate copolymers, methacrylate-butadiene-styrene copolymers, ABS and polymers of the same family; polyolefins, such as low-density polyethylene, polypropylene, low-density chlorinated polyethylene, poly(4-methyl-1-pentene), polyethylene, polystyrene and polymers of the same family; ionomers; poly(epichlorohydrins); polyurethanes, such as products from the polymerization of diols, such as glycerol, trimethylolpropane, 1,2,6-hexanetriol, sorbitol, pentaerythritol, polyether polyols, polyester polyols and compounds of the same family, with polyisocyanates, such as 2,4-tolylene diisocyanate, 2,6-tolylene diisocyanate, 4,4'-diphenylmethane diisocyanate, 1,6-hexamethylene diisocyanate, 4,4'-dicyclohexylmethane diisocyanate and compounds of the same family; and polysulphones, such as the products resulting from the reaction between a sodium salt of 2,2-bis(4-hydroxyphenyl)propane and 4,4'-dichlorodiphenylsulphone; furan resins, such as polyfuran; cellulose-ester plastics, such as cellulose acetate, cellulose acetate-butyrate, cellulose propionate and polymers of the same family; silicones, such as poly(dimethylsiloxane), poly(dimethylsiloxane-co-pheny-lmethylsiloxane) and polymers of the same family; and blends of at least two of the above polymers.

In some of these embodiments, the polymer materials are polyolefins, such as polypropylene, polyurethanes, polyethylene, high-density polyethylene, low-density polyethylene, polyamides, such as nylon-6 and nylon-6,6, PVC, PET and blends and copolymers based on these polymers: ABS, acrylonitrile-butadiene-styrene; ASA, acrylonitrile-styrene-acrylate; CA, cellulose acetate; CAB, cellulose acetate butyrate; CP, cellulose propionate cyclic olefin copolymers; EP, ethylene-propylene; ETFE, ethylene-tetrafluoroethylene; EVAC, ethylene-vinyl acetate; EVOH, ethylene-vinyl alcohol; FEP, tetrafluoroethylene-hexafluoropropylene ionomer; LCP, liquid crystal polymers; MABS, methylmethacrylate-acrylonitrile-butadiene-tyrene; MBS, methacrylate-butadiene-styrene; PA, polyamide; PA 6, polyamide 6; PA 11, polyamide 11; PA 12, polyamide 12; PA 66, polyamide 66; PA 610, polyamide 610; PA 612, polyamide 612 high temperature resistant polyamides; PPA, polyphtalamide transparent polyamide; PAEK, polyaryletherketones; PAI, polyamidimide; PB, polybutene; PBT, polybutylene terephthalate; PC, polycarbonate; PCTFE, polychlorotrifluoroethylene; PE, polyethylene; HDPE, high density polyethylene, HMW-HDPE, high molecular weight high density polyethylene; UHMW-HDPE, ultra high molecular weight high density polyethylene; LDPE, low density polyethylene; LLDPE, linear low density polyethylene; VLDPE, very low density polyethylene; MDPE, medium density polyethylene; PE-C, chlorinated polyethylene; PEI, polyetherimide; PES, polyethersulfone; PET, polyethylene terephthalate; PFA, perfluoro alkoxyl alkane; PIB, polyisobutylene; PMMA, polymethyl methacrylate; PMMI, poly-N-methyl-methacryimide; POM, polyoxymethylene; PP, polypropylene; PP-B, polypropylene impact copolymers; PP-H, polypropylene homopolymers; PP-R, polypropylene random copolymers; PPE, polyphenylene ether; PPS, polyphenylene sulfide; PPSU, polyphenylene sulfone; PS, polystyrene; EPS, expandable polystyrene; HIPS, high impact polystyrene;, polysulfone; PTFE, polytetrafluoroethylene; PVAC, polyvinyl acetate; PVAL, polyvinyl alcohol; PVC, polyvinyl chloride; PVC-C, chlorinated polyvinyl chloride; PVDC, polyvinylidene chloride; PVDF, polyvinylidene fluoride; SAN, styrene-acrylonitrile; SB, styrene-butadiene; SMAH, styrene-maleic anhydride tetrafluoroethylene-hexafluoropropylene-vinylidene fluoride; VC, copolymers of vinyl chloride biodegradable plastics, or any combinations thereof. Also included are thermoplastic elastomers like: PEBA, polyether block amides; TEEE, thermoplastic elastomers, ether ester; TEO, olefinic thermoplastic elastomers; EPDM/PP, ethylene propylene diene rubber-polypropylene elastomeric polymer alloys, ethylene propylene diene rubber-based alloys, acrylonitrile butadiene rubber-based alloys, and/or other elastomeric polymer alloys; TES, styrenic thermoplastic elastomers; TPU, thermoplastic polyurethanes; TPV, thermoplastic vulcanizates thermoplastic resins, and any combinations thereof.

Any of the polymer materials described herein may further include one or more additional additives. Various additional additives are known in the art, such as stabilizers, impact modifiers, and various process aids. These additives may be present with the components that react to polymer material, or these additives may be added to the polymer material after it has been prepared. Suitable additives include pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, antimicrobials, and of course any combination thereof.

In some embodiments, the first polymer material is poly(methyl methacrylate) (PMMA), a rigid thermoplastic polyurethane (TPU), or any combination thereof.

PMMA are generally obtained via free-radical polymerization of mixtures which include methyl methacrylate. These mixtures generally include at least 40% by weight, preferably at least 60% by weight, and particularly preferably at least 80% by weight, of methyl methacrylate, based on the weight of the monomers. These mixtures for preparing polymethyl methacrylates may include other (meth)acrylates which are copolymerizable with methyl methacrylate. The term (meth)acrylates encompasses methacrylates and acrylates, and also mixtures of the two.

The monomers used to prepare these PMMA are well known. They include (meth)acrylates derived from saturated alcohols, for example, methyl acrylate, ethyl (meth)acrylate, propyl (meth)acrylate, n-butyl (meth)acrylate, tert-butyl (meth)acrylate, pentyl (meth)acrylate and 2-ethylhexyl (meth)acrylate; (meth)acrylates derived from unsaturated alcohols, for example oleyl (meth)acrylate, 2-propynyl (meth)acrylate, allyl (meth)acrylate, vinyl (meth)acrylate; aryl (meth)acrylates, such as benzyl (meth)acrylate or phenyl (meth)acrylate, where in each case the aryl radicals may be unsubstituted or have up to four substituents; cycloalkyl (meth)acrylates, such as 3-vinylcyclohexyl (meth)acrylate, bornyl (meth)acrylate; hydroxyalkyl (meth)acrylates, such as 3-hydroxypropyl (meth)acrylate, 3,4-dihydroxybutyl (meth)acrylate, 2-hydroxyethyl (meth)acrylate, 2-hydroxypropyl (meth)acrylate; glycol di(meth)-acrylates, such as 1,4-butanediol (meth)acrylate, (meth)acrylates of ether alcohols, for example tetra-hydrofurfuryl (meth)acrylate, vinyloxyethoxyethyl (meth)acrylate; amides and nitriles of (meth)acrylic acid, for example N-(3-dimethylaminopropyl)-(meth)acrylamide, N-(diethylphosphono)(meth)acrylamide, 1-methacryloylamido-2-methyl-2-propanol; sulphur-containing methacrylates, such as ethylsulphinylethyl (meth)acrylate, 4-thiocyanatobutyl (meth)acrylate, ethylsulphonylethyl (meth)acrylate, thiocyanatomethyl (meth)acrylate, methylsulphinylmethyl (meth)acrylate, bis((meth)acryloyloxyethyl) sulphide; polyfunctional (meth)acrylates, such as trimethyloylpropane tri(meth)acrylate.

Besides the abovementioned (meth)acrylates, the compositions to be polymerized to form the PMMA may also include other unsaturated monomers copolymerizable with methyl methacrylate and the abovementioned (meth)acrylates. They include 1-alkenes, such as 1-hexene, 1-heptene; branched alkenes, such as vinylcyclohexane, 3,3-di-methyl-1-propene, 3-methyl-1-diisobutylene, 4-methyl-1-pentene; acrylonitrile; vinyl esters, such as vinyl acetate; styrene, substituted styrenes having an alkyl substituent in the side chain, e.g., .alpha.-methylstyrene and .alpha.-ethylstyrene, substituted styrenes having an alkyl substituent on the ring, such as vinyltoluene and p-methylstyrene, halogenated styrenes, such as mono-chlorostyrenes, dichlorostyrenes, tribromostyrenes and tetrabromostyrenes; heterocyclic vinyl compounds, such as 2-vinylpyridine, 3-vinylpyridine, 2-methyl-5-vinyl-pyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinyl-pyrrolidone, 2-vinylpyrrolidone, N-vinylpyrrolidine, 3-vinylpyrrolidine, N-vinylcaprolactam, N-vinylbutyrolactam, vinyloxolane, vinylfuran, vinylthiophene, vinylthiolane, vinylthiazoles and hydrogenated vinylthiazoles, vinyloxazoles and hydrogenated vinyloxazoles; vinyl and isoprenyl ethers; maleic acid derivatives, such as maleic anhydride, methylmaleic anhydride, maleimide, methylmaleimide; and dienes, such as divinylbenzene. The amount generally used of these comonomers is from 0 to 60% by weight, preferably from 0 to 40% by weight, and particularly preferably from 0 to 20% by weight, based on the weight of the monomers, and these compounds may be used individually or in the form of a mixture.

The polymerization of PMMA is generally initiated using known free-radical initiators. Among the preferred initiators are, inter alia, the azo initiators well-known to the person skilled in the art, for example AIBN and 1,1-azobiscyclohexanecarbonitrile, and also peroxy compounds, such as methyl ethyl ketone peroxide, acetylacetone peroxide, dilauroyl peroxide, tert-butyl 2-ethylperhexanoate, ketone peroxide, methyl isobutyl ketone peroxide, cyclohexanone peroxide, dibenzoyl peroxide, tert-butyl peroxybenzoate, tert-butylperoxy-isopropyl carbonate, 2,5-bis(2-ethylhexanoylperoxy)-2,5-dimethylhexane, tert-butyl 2-ethylperoxyhexanoate, tert-butyl 3,5,5-trimethylperoxyhexanoate, dicumyl peroxide, 1,1-bis(tert-butylperoxy)cyclohexane, 1,1-bis(tert-butylperoxy)-3,3,5-trimethylcyclohexane, cumyl hydroperoxide, tert-butyl hydroperoxide, bis(4-tert-butylcyclohexyl) peroxydicarbonate, mixtures of two or more of the abovementioned compounds with one another, and also mixtures of the abovementioned compounds with compounds not mentioned but likewise capable of forming free radicals.

Suitable examples of PMMA useful in the invention include Plexiglas® VS100 and Plexiglas® V826, commercially available from Arkema.

Rigid TPU suitable for use in the described technology may be made by reacting a polyisocyanate with at least one diol chain extender, and optionally one or more hydroxyl terminated intermediates. In some embodiments, the rigid TPU of the invention are made by reacting a polyisocyanate with at least one diol chain extender, in the absence of a hydroxyl terminated intermediate, and in some embodiments free of any other reactive components. In some embodiments, the rigid TPU may also be described as a high hardness TPU that is having a Shore D hardness of 80, 81, 82, 83 or greater, and in some embodiments 83.5 and or even 85, as measured according to ASTM D-2240.

The rigid and/or high hardness TPU may be made by reacting a polyisocyanate with a short chain diol (i.e., chain extender), and optionally less than about 5, 4, 3, 2, or 1 weight percent of polyol (i.e., hydroxyl terminated intermediate). In some embodiments, the TPU is even substantially free of any polyol. Thus, the TPU has at least 95%, 96%, 97%, 98% or 99% weight hard segment, and in some embodiments even 100% hard segment.

Suitable chain extenders to make the TPU include relatively small polyhydroxy compounds, for example lower aliphatic or short chain glycols having from 2 up to 20 or in some cases from 2 up to 12 carbon atoms. Suitable examples include ethylene glycol, diethylene glycol, propylene glycol, dipropylene glycol, 1,4-butanediol (BDO), 1,6-hexanediol (HDO), 1,3-butanediol, 1,5-pentanediol, neopentylglycol, 1,3-cyclohexanedimethanol, 1,4-cyclohexanedimethanol (CHDM), 2,2-bis[4-(2-hydroxyethoxy) phenyl]propane (HEPP) and hydroxyethyl resorcinol (HER), as well as mixtures thereof. In some embodiments, the chain extenders are 1,4-butanediol and 1,6-hexanediol. Other glycols, such as aromatic glycols could be used, but in some embodiments the TPUs of the invention are not made using such materials.

In some embodiments, the chain extender used to prepare the TPU is substantially free of, or even completely free of, 1,6-hexanediol. In some embodiments, the chain extender used to prepare the TPU includes a cyclic chain extender. Suitable examples include CHDM, HEPP, HER, and combinations thereof. In some embodiments, the chain extender used to prepare the TPU includes an aromatic cyclic chain extender, for example, HEPP, HER, or a combination thereof. In some embodiments, the chain extender used to prepare the TPU includes an aliphatic cyclic chain extender, for example CHDM. In some embodiments, the chain extender used to prepare the TPU is substantially free of, or even completely free of aromatic chain extenders, for example, aromatic cyclic chain extenders.

Suitable polyisocyanates to make the rigid TPU include aromatic diisocyanates such as 4,4'-methylenebis-(phenyl isocyanate) (MDI), m-xylene diisocyanate (XDI), phenylene-1,4-diisocyanate, naphthalene-1,5-diisocyanate, and toluene diisocyanate (TDI); as well as aliphatic diisocyanates such as isophorone diisocyanate (IPDI), 1,3-cyclohexyl diisocyanate, 1,4-cyclohexyl diisocyanate (CHDI), decane-1,10-diisocyanate, and dicyclohexylmethane-4,4'-diisocyanate (H12MDI), or any combination thereof.

Mixtures of two or more polyisocyanates may be used. In some embodiments, the polyisocyanate is a combination of MDI and H12MDI, or even a combination 1,3-cyclohexyl diisocyanate and 1,4-cyclohexyl diisocyanate. In some embodiments, particularly when referring to the TPU of the backsheets described below, the polyisocyanate may include MDI. In some embodiments, particularly when referring to the TPU of the encapsulants described below, the polyisocyanate may include H12MDI.

Suitable polyols (hydroxyl terminated intermediates), when present, include one or more hydroxyl terminated polyesters, one or more hydroxyl terminated polyethers, one or more hydroxyl terminated polycarbonates or mixtures thereof.

Suitable hydroxyl terminated polyester intermediates include linear polyesters having a number average molecular weight (Mn) of from 500 to 10,000, from 700 to 5,000, or from 700 to 4,000, and generally have an acid number generally less than 1.3 or less than 0.8. The molecular weight is determined by assay of the terminal functional groups and is related to the number average molecular weight. The polyester intermediates may be produced by (1) an esterification reaction of one or more glycols with one or more dicarboxylic acids or anhydrides or (2) by transesterification reaction, i.e., the reaction of one or more glycols with esters of dicarboxylic acids. Mole ratios generally in excess of more than one mole of glycol to acid are preferred so as to obtain linear chains having a preponderance of terminal hydroxyl groups. Suitable polyester intermediates also include various lactones such as polycaprolactone typically made from ε-caprolactone and a bifunctional initiator such as diethylene glycol. The dicarboxylic acids of the desired polyester can be aliphatic, cycloaliphatic, aromatic, or combinations thereof. Suitable dicarboxylic acids which may be used alone or in mixtures generally have a total of from 4 to 15 carbon atoms and include: succinic, glutaric, adipic, pimelic, suberic, azelaic, sebacic, dodecanedioic, isophthalic, terephthalic, cyclohexane dicarboxylic, Anhydrides of the above dicarboxylic acids such as phthalic anhydride, tetrahydrophthalic anhydride, can also be used. Adipic acid is a preferred acid. The glycols which are reacted to form a desirable polyester intermediate can be aliphatic, aromatic, or combinations thereof, including any of the glycol described above in the chain extender section, and have a total of from 2 to 20 or from 2 to 12 carbon atoms. Suitable examples include ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and mixtures thereof.

Suitable hydroxyl terminated polyether intermediates include polyether polyols derived from a diol or polyol having a total of from 2 to 15 carbon atoms, in some embodiments an alkyl diol or glycol which is reacted with an ether including an alkylene oxide having from 2 to 6 carbon atoms, typically ethylene oxide or propylene oxide or mixtures thereof. For example, hydroxyl functional polyether can be produced by first reacting propylene glycol with propylene oxide followed by subsequent reaction with ethylene oxide. Primary hydroxyl groups resulting from ethylene oxide are more reactive than secondary hydroxyl groups and thus are preferred. Useful commercial polyether polyols include poly(ethylene glycol) including ethylene oxide reacted with ethylene glycol, poly(propylene glycol) including propylene oxide reacted with propylene glycol, poly(tetramethylene glycol) including water reacted with tetrahydrofuran (PTMEG). In some embodiments, the polyether intermediate includes PTMEG. Suitable polyether polyols also include polyamide adducts of an alkylene oxide and can include, for example, ethylenediamine adduct including the reaction product of ethylenediamine and propylene oxide, diethylenetriamine adduct including the reaction product of diethylenetriamine with propylene oxide, and similar polyamide type polyether polyols. Copolyethers can also be utilized in the current invention. Typical copolyethers include the reaction product of THF and ethylene oxide or THF and propylene oxide. These are available from BASF as PolyTHF® B, a block copolymer, and polyTHF R, a random copolymer. The various polyether intermediates generally have a number average molecular weight (Mn) as determined by assay of the terminal functional groups which is an average molecular weight greater than 700, such as from 700 to 10,000, from 1000 to 5000, or from 1000 to 2500. A particular desirable polyether intermediate is a blend of two or more different molecular weight polyethers, such as a blend of 2000 Mₙ and 1000 Mₙ PTMEG.

Suitable hydroxyl terminated polycarbonates include those prepared by reacting a glycol with a carbonate. U.S. Patent No. 4,131,731 discloses hydroxyl terminated polycarbonates and their preparation. Such polycarbonates are linear and have terminal hydroxyl groups with essential exclusion of other terminal groups. The essential reactants are glycols and carbonates. Suitable glycols are selected from cycloaliphatic and aliphatic diols containing 4 to 40, and or even 4 to 12 carbon atoms, and from polyoxyalkylene glycols containing 2 to 20 alkoxy groups per molecular with each alkoxy group containing 2 to 4 carbon atoms. Diols suitable for use in the present invention include aliphatic diols containing 4 to 12 carbon atoms such as butanediol-1,4, pentanediol-1,4, neopentyl glycol, hexanediol-1,6, 2,2,4-trimethylhexanediol-1,6, decanediol-1,10, hydrogenated dilinoleylglycol, hydrogenated dioleylglycol; and cycloaliphatic diols such as cyclohexanediol-1,3, dimethylolcyclohexane-1,4, cyclohexanediol-1,4, dimethylolcyclohexane-1,3, 1,4-endomethylene-2-hydroxy-5-hydroxymethyl cyclohexane, and polyalkylene glycols. The diols used in the reaction may be a single diol or a mixture of diols depending on the properties desired in the finished product. Polycarbonate intermediates which are hydroxyl terminated are generally those known to the art and in the literature. Suitable carbonates are selected from alkylene carbonates composed of a 5 to 7 member ring. Suitable carbonates for use herein include ethylene carbonate, trimethylene carbonate, tetramethylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate, and 2,4-pentylene carbonate. Also, suitable herein are dialkylcarbonates, cycloaliphatic carbonates, and diarylcarbonates. The dialkylcarbonates can contain 2 to 5 carbon atoms in each alkyl group and specific examples thereof are diethylcarbonate and dipropylcarbonate. Cycloaliphatic carbonates, especially dicycloaliphatic carbonates, can contain 4 to 7 carbon atoms in each cyclic structure, and there can be one or two of such structures. When one group is cycloaliphatic, the other can be either alkyl or aryl. On the other hand, if one group is aryl, the other can be alkyl or cycloaliphatic. Examples of suitable diarylcarbonates, which can contain 6 to 20 carbon atoms in each aryl group, are diphenylcarbonate, ditolylcarbonate, and dinaphthylcarbonate.

In some embodiments, the rigid TPU is made by reacting the polyisocyanate shown above with the chain extender, without any polyol being present. If polyols are used, they should be used in small amounts of less than 5 weight percent of the total TPU weight. If used, the polyols, also known as hydroxyl terminated intermediates, are used in very small amounts as stated above to increase processability and impact strength. The polyols which can be used are any of the normal polyols used in making TPU polymers. These include hydroxyl terminated polyesters, hydroxyl terminated polyethers, hydroxyl terminated poly(ester-ether), and hydroxyl terminated polycarbonates.

The level of polyisocyanate, preferably diisocyanate, used is the equivalent weight of diisocyanate to the equivalent weight of hydroxyl containing components (i.e., hydroxyl terminated intermediate, if used, and the chain extender glycol). The ratio of equivalent weight of polyisocyanate to hydroxyl containing components may be from 0.95 to 1.10 or from 0.96 to 1.02, or even from 0.97 to 1.005.

The reactants to make the rigid TPU may be reacted together in a "one shot" polymerization process wherein all of the components, including reactants are added together simultaneously or substantially simultaneously to a heated extruder and reacted to form the TPU polymer. The reaction temperature utilizing urethane catalyst are generally from 175°C to 245°C, and in some embodiments from 180°C to 220°C. The equivalent ratio of the diisocyanate to the total equivalents of the hydroxyl terminated intermediate and the diol chain extender is generally from 0.95 to 1.05, desirably from 0.97 to 1.03, or from 0.98 to 1.01.

Suitable rigid TPU are available commercially as Isoplast® available from Lubrizol Advanced Materials, Inc. of Cleveland, Ohio, U.S.A.

In some embodiments, the rigid TPU suitable for use in the invention have one or more of the following properties: (i) a Vicat softening point, as measured by ISO306/A50, of at least 140°C; (ii) a partial discharge, as measured by IEC 60664-1, of greater than 1000 volts; (iii) a Shore D hardness of at least 70. In some embodiments, the rigid TPU has all of these properties. In some embodiments, the rigid TPU has a Shore D hardness of at least 75, 80, or 81, or at least 82, 83 or 83.5.

In some embodiments, the rigid TPU of the invention includes a rigid aliphatic TPU composition prepared from: (a) one or more aliphatic polyisocyanates; and (b) one or more cyclic aliphatic diol chain extenders; and optionally (c) one or more cyclic aliphatic polyols. In some embodiments, the rigid TPU of the invention is substantially free of, or even completely free of, rigid aromatic TPU.

In some embodiments, the rigid TPU of the invention includes a rigid aromatic TPU composition prepared from: (a) one or more aromatic polyisocyanates; and (b) one or more cyclic aliphatic and/or aromatic diol chain extenders; and optionally (c) one or more cyclic aliphatic and/or aromatic polyols. In some embodiments, the rigid TPU of the invention is substantially free of, or even completely free of, rigid aliphatic TPU.

In any of these embodiments, the mole ratio of (a) isocyanate functional groups to (b) hydroxyl functional groups in the rigid TPU, expressed as the mole ratio (a):(b), is between 0.95:1 to 1.07:1, or from 0.95:1 to 1.10:1, or from 0.96:1 to 1.02:1, or from 0.97:1 to 1.005:1. These ratios may also be expressed as ranges, for example a ratio of from 0.95 to 1.10 may also be expressed herein as a ratio of 0.95:1 to 1.10:1.

In some embodiments, the rigid TPU of the invention is prepared from: (a) one or more aromatic polyisocyanates that includes methylene diphenyl diisocyanate; and (b) one or more cyclic aliphatic diol chain extenders that includes 1,3-cyclohexanedimethanol, 1,4-cyclohexanedimethanol, or mixtures thereof. In some of these embodiments, the mole ratio of (a) isocyanate functional groups to (b) hydroxyl functional groups in the rigid TPU, expressed as the mole ratio (a):(b), is between 0.95:1 to 1.07:1, or from 0.95:1 to 1.10:1, or from 0.96:1 to 1.02:1, or from 0.97:1 to 1.005:1. These ratios may also be expressed as ranges, for example, a ratio of from 0.95 to 1.10 may also be expressed herein as a ratio of 0.95:1 to 1.10:1.

In some embodiments, the rigid TPU is made from materials that are substantially free of, or even completely free of, cyclic polyols (where the polyol is a separate optional component from the chain extender). In some embodiments, the rigid TPU is made from materials that are substantially free of, or even completely free of, any polyols (where the polyol is separate optional component from the chain extender).

In some embodiments, the weight ratio of (a), the one or more aromatic polyisocyanates, to (b), the one or more cyclic aliphatic and/or aromatic diol chain extenders, present in the reaction to produce the rigid TPU, expressed as the weight ratio (a):(b) is from 1:1.5 to 1:2 or from 1:1.7 to 1:1.8 or even above 1:1.75.

Any of the rigid TPU described above may also include one or more additives. These additives may be present with the components that react to form the rigid TPU, or these additives may be added to the rigid TPU after it has been prepared. Suitable additives include pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, antimicrobials, and of course any combination thereof.

Suitable pigments include white pigments such as titanium dioxide or zinc oxide, as well as black pigments such as carbon black. In some embodiments, particularly with regard to the backsheets described below, the TPU includes at least one pigment. In some embodiments, particularly with regard to the encapsulants described below, the TPU is substantially free of, or even completely free of, any pigments.

Suitable impact strength modifiers include carbonyl modified polyolefins and acrylic impact modifiers, for example PARALOID™ EXL materials commercially available from Dow®. When present, the impact modifier may make up from 1 to 20 percent by weight of the TPU, or from 5 to 15, or from 5 to 10 percent by weight of the TPU.

In some embodiments, the rigid TPU of the invention may be blended with other materials, for example, with polyamides. In other embodiments, the rigid TPU of the invention is substantially free of, or even completely free of, polyamides. By substantially free of it is meant that the overall TPU composition, or even the backsheet made from the TPU, contains no more than 5 percent by weight polyamide materials, or even no more than 4, 3, 2, 1, or 0.5 percent by weight polyamide materials.

In some embodiments, the rigid TPU of the invention is a rigid aromatic TPU that is a rigid TPU containing aromatic groups in the backbone of the TPU. In some embodiments, the rigid TPU of the invention is a rigid aliphatic TPU that is a rigid TPU that does not contain any aromatic groups in the backbone of the TPU. In some embodiments, the rigid TPU of the invention is a rigid cyclic aliphatic TPU that is a rigid TPU that does not contain any aromatic groups in the backbone of the TPU but which does contain cyclic non-aromatic groups in the backbone of the TPU.

Suitable examples of rigid TPU include ISOPLAST® 2530 commercially available from the Lubrizol Corporation.

In some embodiments, the second polymer material is a polystyrene (PS), a non-rigid thermoplastic polyurethane (TPU), or any combination thereof.

In some embodiments, the extrudate may further include a third fourth or even more polymer materials, where all of the polymer materials used are present in any set of alternating layers. These additional polymer materials may be any of the materials described above, so long as the requirements described are met.

The PS may be a thermoplastic polymer or copolymer of styrene. In some embodiments, the PS contains at most 0.1% by weight bromine while in other embodiments contains no bromine. Suitable PS include polystyrene homopolymers, and copolymers of styrene with ethylene, propylene, acrylic acid, maleic anhydride, and/or acrylonitrile. In some embodiments, the PS includes a polystyrene homopolymer.

Suitable examples of PS include Styron™ 615APR commercially available from the Styron company.

Non-rigid TPU suitable for use in the described technology may be made by reacting a polyisocyanate with at least one diol chain extender, and one or more hydroxyl terminated intermediates.

In some embodiments, the non-rigid TPU may also be described as having a Shore D hardness of 80 or lower, 70 or lower, or even 65 or lower, as measured according to ASTM D-2240.

In some embodiments, the non-rigid TPU will include more than 5, 10, or even more than 15 or 20 or even weight percent of polyol (i.e., hydroxyl terminated intermediate). That is the non-rigid TPU will contain block and or units in its structure derived from the polyol in the amounts described and/or the reaction mixture used to prepare the TPU will contain polyol in the amounts described. Non-rigid TPU may also in some embodiments be described as containing more than 5, 10, 15, or even 20 percent by weight soft segment (which is derived from the polyol).

Suitable polyisocyanates for use in making the non-rigid TPU include any of those described above in the rigid TPU section. Suitable diol chain extenders suitable for making the non-rigid TPU include any of those described above in the rigid TPU section. Suitable hydroxyl terminated polyether intermediates include any of those described above in the rigid TPU section.

In some embodiments, the non-rigid TPU includes a TPU made from (i) a diisocyanates that includes 4,4'-methylenebis-(phenyl isocyanate) (MDI), m-xylene diisocyanate (XDI), dicyclohexylmethane-4,4'-diisocyanate (H12MDI), or some combination thereof; (ii) a chain extender that includes ethylene glycol, diethylene glycol, propylene glycol, dipropylene glycol, 1,4-butanediol, 1,6-hexanediol, 1,3-butanediol, 1,5-pentanediol, neopentylglycol, 1,3-cyclohexanedimethanol, 1,4-cyclohexanedimethanol, or some combination thereof; and (iii) a polyether polyols that includes poly(ethylene glycol) including ethylene oxide reacted with ethylene glycol, poly(propylene glycol) including propylene oxide reacted with propylene glycol, poly(tetramethylene glycol) including water reacted with tetrahydrofuran (PTMEG). In some embodiments, the encapsulant includes a non-rigid TPU made from (i) MDI, (ii) 1,4-butanediol, 1,6-hexanediol, or a combination thereof, and (iii) PTMEG. In some embodiments, the encapsulant includes a non-rigid TPU made from (i) H12MDI, (ii) 1,4-butanediol, 1,6-hexanediol, or a combination thereof, and (iii) PTMEG.

The non-rigid TPU may be made by the same methods and processes described for the rigid TPU above, and in some embodiments may include one or more additional additives and/or be blended with one or more other polymer materials. Suitable additional additives include any of those described herein. Suitable polymer materials include any of those described above, especially those described as alternative polymer materials.

Suitable examples of non-rigid TPU include Estane® 1351, commercially available from the Lubrizol Corporation.

In some embodiments, the first polymer material used in the extrudate includes a thermoplastic polyurethane prepared from a diisocyanate and chain extender and the second polymer material includes a thermoplastic polyurethane prepared from a diisocyanate, a chain extender, and a hydroxyl terminated intermediate.

In some embodiments, the first polymer material and/or the second polymer material comprises at least one rigid thermoplastic polyurethane, wherein said rigid thermoplastic polyurethane has the following properties: (i) a Shore D durometer of at least 80, as measured according to ASTM D-2240; and (ii) a soft segment content of less than 5 weight percent.

In some embodiments, the first polymer material and/or the second polymer material comprises at least one rigid thermoplastic polyurethane, wherein said rigid thermoplastic polyurethane is made by reacting at least one polyisocyanate with at least one diol chain extender.

The technology described herein specifies the use of an external lubricant in order to obtain the described benefits.

Examples of suitable external lubricants include: hydrocarbon waxes, for example, paraffin waxes, Fischer-Tropsch waxes, alpha olefins, microcrystalline waxes amide waxes, for example, ethylene bis(stearamide) wax; polyethylene waxes, for example, A-C® 6A commercially available from Honeywell; and oxidized low and high density polyethylene waxes, for example, A-C® 629 A (low density) A-C® 316A (high density), each of which are available from Honeywell. In some embodiments, the external lubricant includes paraffin wax lubricants, oxidized polyethylene lubricants, and combinations of these. Suitable external lubricants also include STRUKTOL® TR 131, an unsaturated primary amide derived from erucic acid, STRUKTOL® TR 251, a complex oleochemical mixture containing mono and di amides and metal soap, or any combination thereof. Suitable external lubricants also include ester waxes, such as many of the Loxiol® products available from Emery Oleochemicals.

Still further examples of the external lubricants can include, without limitation, metal stearates, such as barium stearate, calcium stearate, and magnesium stearate, and combinations thereof. Any of the polymer materials described above, in the any of the first polymer materials, any of the second polymer materials, or both, can include one or more of the external lubricants described herein in an amount of 0.1 to 3 parts by weight, for example 0.2 to 1.0 parts by weight, based on 100 parts by weight of the overall extrudate and/or film.

In some embodiments, the external lubricant comprises hydrocarbon waxes, amide waxes, polyethylene waxes, oxidized low and high density polyethylene waxes, metal stearates, or any combination thereof. In some embodiments, the external lubricant comprises an unsaturated primary amide derived from erucic acid (for example, STRUKTOL® TR 131), a complex oleochemical mixture containing mono and di amides and metal soap (for example, STRUKTOL® TR 251), or any combination thereof.

The disclosed technology further provides for a method of making a polymer extrudate. The method involves: (i) coextruding a plurality of adjoining layers; and (ii) merging said layers to form a multilayer film, where the plurality of adjoining multilayer and/or microlayer includes at least one layer including a first polymer material having a first set of rheological properties and at least one layer including a second polymer material having a second set of rheological properties different than the first set of rheological properties, where the at least one of the first polymer material and the second polymer material includes an external lubricant.

The described processes may be used to prepare any of the extrudates described above.

The disclosed technology further provides for a method of making a multilayer oxygen barrier film. The method involves: (i) coextruding a plurality of adjoining layers; (ii) merging said layers to form a multilayer film; (iii) combining the multilayer film with a bulk layer, where the plurality of adjoining multilayer and/or microlayer includes at least one layer that includes a first polymer material having a first set of rheological properties and at least one layer that includes a second polymer material having a second set of rheological properties different than the first set of rheological properties, where the at least one of the first polymer material and the second polymer material includes an external lubricant.

The amount of each chemical component described is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, byproducts, derivatives, and other such materials which are normally understood to be present in the commercial grade.

It is known that some of the materials described above may interact in the final formulation, so that the components of the final formulation may be different from those that are initially added. For instance, metal ions (of, e.g., a flame retardant) can migrate to other acidic or anionic sites of other molecules. The products formed thereby, including the products formed upon employing the composition of the technology described herein in its intended use, may not be susceptible of easy description. Nevertheless, all such modifications and reaction products are included within the scope of the technology described herein; the technology described herein encompasses the composition prepared by admixing the components described above.

### EXAMPLES

The technology described herein may be better understood with reference to the following non-limiting examples.

*Materials.* For the mismatched viscosity system demsontrated herein, two commercial *poly(methyl methacrylate*) (PMMA), Plexiglas® VS100 (referred to below as PMMA-1) and Plexiglas® V826 (referred to below as PMMA-2) and one polystyrene (PS), Styron™ 615APR (referred to below as PS) are purchased from Arkema and Styron company, respectively.

Using PMMA-1 and PS provides comparative examples where the viscotity of the polymer materials are well matched. Using PMMA-2 and PS without an external lubricant provides comparative examples where the viscotity of the polymer materials are mismatched, and where the benefit of the technology described herein is not applied. Using PMMA-2 and PS with an external lubricant provides inventive examples where the viscotity of the polymer materials are mismatched, but where the benefit of the technology described is shown.

For the elasticity mismatched system demonstraed herein, two thermoplastic polyurethane (TPU), Isoplast® 2530 (referred to below as TPU-1) and Estane® 1351 (referred to below as TPU-2), are provided by Lubrizol Advanced Materials, Inc.

Using TPU-1 and TPU-2 without an external lubricant provides comparative examples where the elasticity of the polymer materials are mismatched, and where the benefit of the technology described herein is not applied. Using TPU-1 and TPU-2 with an external lubricant provides inventive examples where the elasticity of the polymer materials are mismatched, but where the benefit of the technology described is shown.

The examples described herein are prepared multiple times with various numbers of layers, to demonstrate the full scope of the described technology. A summary of the systems used for these examples is provided in Table 1 below.

**Table 1: Example Summaries**

| Example ID | First Polymer Material | Second Polymer Material | External Lubricant |
|---|---|---|---|
| Comparative Extrudate Example Set A | PMMA-1 | PS | None |
| Comparative Extrudate Example Set B | PMMA-2 | PS | None |
| Inventive Extrudate Example Set C | PMMA-2 | PS | oleochemical mixture containing mono and di amides and metal soap |
| Comparative Extrudate Example Set D | TPU-1 | TPU-2 | None |
| Inventive Extrudate Example Set E | TPU-1 | TPU-2 | unsaturated primary amide derived from erucic acid |

*Rheological Measurements.* The steady and oscillation shear experiments are performed in a rotational rheometer (Thermo Fisher MARS III). All samples are vacuum dried for 12 hours at 80°C before the experiments. The rheological experiments are conducted under a nitrogen atmosphere in order to avoid oxidative degradation of the samples. The experiments are performed at 205°C for the TPU containing examples and 240°C for the PMMA/PS containing examples. Time and temperature superposition are performed using the IRIS® software.

*Rheological Results.* The dynamic moduli and shear viscosity of the materials used in this work are summarized below. PMMA-2 exhibits higher dynamic moduli that the PS and PMMA-1. Nevertheless, the three materials are relatively inelastic. PMMA-2 is 10 times more viscous at low shear rates and shows a more pronounced shear-thinning than PS and PMMA-1. On the other hand, even though the viscosity ratio of TPU-1 and TPU-2 is around 3:1, the elasticity ratio is more than 10:1.

*Co-extrusion system and conditions.* The system used to extrude the examples is comprised of two Killion extruders, model #19782, two Zenith melt pumps, model #K46LP56, and different numbers of multiplier dies. The samples are collected from the end of each multiplier die at molten state. After cutting and cooling, the cut faces of the samples are polished smooth using sandpaper. The polished sample faces are then inspected under a microscope and pictures of the faces taken for comparison.

*Simulation Method.* The flow through the multiplier dies is computed with Ansys Polyflow®. The flow is assumed to incompressible and isothermal and the rheology of the polymers is assumed well described by a multi-mode PTT constitutive model. The parameters for the PS/PMMA used in the simulations are summarized in Table 2. Data is only shown for the longest relaxation time, because it was found that it was enough to capture the processing behavior and calculations and simulations are substantially quicker than if the full multi-mode model is used. TPUs are not simulated in this paper due to the complex molecular structure.

**Table 2: Parameters for Polyflow® simulation**

| Parameter | PMMA-1 | PS | PMMA-2 |
|---|---|---|---|
| ηᵣ (Pa.s) | 0.63 | 0.56 | 0.015 |
| η (Pa.s) | 39.99 | 102.47 | 926.50 |
| ξ | 0.546 | 0.510 | 0.336 |
| ε | 0.490 | 0.072 | 0.468 |
| A (s) | 0.785 | 1.260 | 9.220 |

*Gᵢ* and *λᵢ* are the relaxation modulus and relaxation time of mode *i* and *D* is the rate of deformation tensor. The adjustable parameters *ξ* and a were kept constant for all relaxation modes.

*Results and Discussion.* With regards to the visual evaluation of the layer structure of the extrudates, images are generated from all the cut and polished samples, which are made with various number of layers. In particular, samples were generated from 4, 8, 16, 32, 64, and 128 layers, however, only a representative selection of results is described herein.

For the Comparative Extrudate Example Set A, made with well-matched PMMA-1 and PS and no external lubricant, the individual samples overall show relatively even layer formation with an increasing number of layers. Important discrepancies in layer formation to note are the uneven layer area exiting the feedblock and the "paper folding" phenomena that can be seen along the edges of the examples in the case of 128 layers.

For the Comparative Extrudate Example Set B, made with mismatched PMMA-2 and PS and no external lubricant, the results are very different. In the 8-layer mismatched viscosity example, the early stages of viscous encapsulation can be seen. In the 32-layer mismatched viscosities sample, the layering is slightly more uniform but there is still evidence of significant viscous encapsulation, since there is clearly more PS along the outer edges of the sample. Viscous encapsulation can be further proved by the very thick PS layer in the middle of the sample, which is caused by the stack of flow wrapped by PS from the previous multiplier die. Finally, in the 128 layer mismatched viscosities sample, the layer thicknesses throughout the sample are still visibly uneven, with PS still congregating in areas close to the outer edge of the sample. As with Comparative Extrudate Example Set A, Comparative Extrudate Example Set B shows uneven layers of the two polymers directly after exiting the feedblock.

For the Comparative Extrudate Example Set D, made with mismatched TPU-1 and TPU-2 and no external lubricant, the layered structure completely disappears after the 5 layer example, with the two materials interacting to the point that no distinct layers are present in the extrudate.

These results show that the system parameters discussed above, which may be impacted by the rheological properties of the materials used, as discussed above impact the viscous encapsulation and/or other issues believed to inhibit the ability to produce acceptable multilayer and/or microlayer co-extruded materials. The comparative examples show that well matched systems can indeed perform well, giving well-formed and distinct multilayer structures, but systems that are not well matched, including those mismatched by viscosity (as in the PS/PMMA-2 examples) and/or mismatched in elasticity (as in the TPU1-TPU-2 examples) show the expected viscoelastic instabilities that can prohibit layer-multiplying co-extrusion.

These examples are repeated in a more advanced multiplier die system, which does provide some benefit across all of the examples sets, but which does not change the relative performance of the example sets, showing that while equipment modifications can have an impact, they problems described above carry over through various equipment and mechanical systems.

The process simulation results provided insight into the wall-slip effect. In order to assess the ability of the present technology to improve the layered structure, Polyflow® was used to simulate flow in the multiplier die with different processing conditions. Polyflow® simulations clearly show that as the degree of wall slip increases, the second normal stress difference is severely reduced, the velocity profile becomes highly consistent and the interface between layers becomes more stable and flat. The low die drag enables most of the elastic deformations in the melts to relax quickly, minimizing the interfacial and elastic instabilities to a level that does not affect the layers' structure. These results further support the theory of the described technology, that reducing the second normal stress difference in the processing equipment will reduce the interfacial and elastic instabilities and so lead to better micro layer structures, and as increasing the degree of wall slip will reduce the second normal stress difference, using external lubricants with the polymer materials that increase the degree of wall slip will therefore result in better micro layer structures. With this support in mind, we turn to the additional test results to demonstrate the application of the described technology.

Inventive Example Extrudate Set C and Inventive Example Extrudate Set E now introduce the external lubricant, in order to achieve such high levels of slip at the wall minimizing instability inception and propagation. The examples for these inventive example sets provide the most distinct and well-formed layered structures. These examples sets used the more advanced multiplier die and provide better relative results than any of the comparative examples. Particularly of note is the significant reduction and even elimination of the "folding" edges in the inventive example sets, which were seen from the extrudates without external lubricant. While not wishing to be bound by theory, it is believed that this is because the external lubricant forms an insulating layer between the melts and metal of the processing equipment, reducing the second normal-stress differences caused by shear during processing in non-axisymmetric channels. Then, the interfacial and elastic instabilities in multilayer flow are dramatically weakened.

Since the described technology, which includes the use of an external lubricant, truly works for providing the system with low friction, instead of obtaining the square extrudate from the multiplier die at 65 layers, the invention TPU example is successfully extruded as a 65 layer film with total thickness of only 400 microns. The uniformity of layer structure in the film at 65 layers is very good, especially compared to the comparative example that uses the same polymer materials. When one considers that the viscosity ratio of the TPU materials used is 3:1, the elasticity ratio is over 10:1, and the contract ratio in coat-hanger die is extremely high, these results represent a notable success.

As used herein, the transitional term "comprising," which is synonymous with "including," "containing," or "characterized by," is inclusive or open-ended and does not exclude additional, un-recited elements or method steps. However, in each recitation of "comprising" herein, it is intended that the term also encompass, as alternative embodiments, the phrases "consisting essentially of" and "consisting of," where "consisting of" excludes any element or step not specified and "consisting essentially of" permits the inclusion of additional un-recited elements or steps that do not materially affect the basic and novel characteristics of the composition or method under consideration. That is "consisting essentially of" permits the inclusion of substances that do not materially affect the basic and novel characteristics of the composition under consideration.

While certain representative embodiments and details have been shown for the purpose of illustrating the subject technology described herein, it will be apparent to those skilled in this art that various changes and modifications can be made therein without departing from the scope of the subject invention. In this regard, the scope of the technology described herein is to be limited only by the following claims.

## Claims

1. A polymer extrudate comprising a plurality of extruded polymer layers comprising a plurality of alternating layers of at least first polymer material having a first set of rheological properties and a second polymer material having a second set of rheological properties different than the first set of rheological properties;
wherein the at least one of the first polymer material and the second polymer material comprises an external lubricant and wherein the first and second sets of rheological properties comprise one or more of the following properties (a) the dynamic moduli, as measured by a rotation rheometer; and (b) the shear viscosity, as measured by a capillary rheometer.

2. The polymer extrudate of any of the preceding claims wherein the first and second sets of rheological properties are different in one or more of the following ways:
(a) the dynamic moduli of the first polymer material and the second polymer material are different, in that the ratio of the dynamic moduli of the first polymer material to the dynamic moduli of the second polymer material is at least 2:1;
(b) the shear viscosity of the first polymer material and the second polymer material are different, in that the ratio of the shear viscosity of the first polymer material to the shear viscosity of the second polymer material is at least 2:1;
(c) the first and second normal-stress differences of the first polymer material and the second polymer material are different, in that the ratio of the first and second normal-stress differences of the first polymer material to the first and second normal-stress differences of the second polymer material is at least 2:1.

3. The polymer extrudate of any of the preceding claims wherein the first polymer material has:
(a) a dynamic moduli from 100 to 300,000 Pa;
(b) a shear viscosity from 300 to 10,000 Pa-s;
wherein the second polymer material has:
(a) a dynamic moduli from 1 to 80,000 Pa;
(b) a shear viscosity from 100 to 1,000 Pa-s;

4. The polymer extrudate of any of the preceding claims wherein the external lubricant comprises hydrocarbon waxes, amide waxes, polyethylene waxes, oxidized low and high density polyethylene waxes, metal stearates, or any combination thereof.

5. The polymer extrudate of any of the preceding claims wherein the external lubricant comprises unsaturated primary amide derived from erucic acid, a complex oleochemical mixture containing mono and di amides and metal soap, or any combination thereof.

6. The polymer extrudate of any of the preceding claims wherein the first polymer material comprises a polystyrene and the second polymer material comprises a poly(methyl methacrylate).

7. The polymer extrudate of any of the preceding claims wherein the first polymer material comprises a thermoplastic polyurethane prepared from a diisocyanate and chain extender and the second polymer material comprises a thermoplastic polyurethane prepared from a diisocyanate, a chain extender, and a hydroxyl terminated intermediate.

8. The polymer extrudate of any of the preceding claims wherein the first polymer material and/or the second polymer material comprises at least one rigid thermoplastic polyurethane, wherein said rigid thermoplastic polyurethane has the following properties:
(i) a Shore D durometer of at least 80, as measured according to ASTM D-2240; and
(ii) a soft segment content of less than 5 weight percent.

9. The polymer extrudate of any of the preceding claims wherein the first polymer material and/or the second polymer material comprises at least one rigid thermoplastic polyurethane, wherein said rigid thermoplastic polyurethane is made by reacting at least one polyisocyanate with at least one diol chain extender.

10. A multilayer barrier film comprising: a) a bulk layer; and b) a microlayer section comprising the extrudate of any of the preceding claims.

11. The multilayer barrier film of claim 10 wherein the microlayer section comprises between 10 and 2000 microlayers.

12. The multilayer barrier film of claim 10 wherein the multilayer film comprises a second bulk layer, and said microlayer section is positioned between said bulk layer and said second bulk layer.

13. The multilayer barrier film of claim 10 wherein the bulk layer comprises one or more olefinic polymers or copolymers, polyesters or copolyesters, styrenic polymers or copolymers, amidic polymers or copolymers, polyurethanes, and polycarbonates.

14. A method of making a polymer extrudate wherein said method comprises the steps of:
I. coextruding a plurality of adjoining layers; and
II. merging said layers to form a multilayer film;
wherein the plurality of adjoining layers comprises at least one layer comprising a first polymer material having a first set of rheological properties and at least one layer comprising a second polymer material having a second set of rheological properties different than the first set of rheological properties and wherein the first and second sets of rheological properties comprise one or more of the following properties (a) the dynamic moduli, as measured by a rotation rheometer; and (b) the shear viscosity, as measured by a capillary rheometer;
wherein the at least one of the first polymer material and the second polymer material comprises an external lubricant.

## Patentansprüche

1. Polymerextrudat umfassend eine Mehrzahl extrudierter Polymerschichten umfassend eine Mehrzahl abwechselnder Schichten von mindestens einem ersten Polymermaterial, das einen ersten Satz rheologischer Eigenschaften aufweist, und einem zweiten Polymermaterial, das einen zweiten Satz rheologischer Eigenschaften aufweist, die von dem ersten Satz rheologischer Eigenschaften verschieden sind;
wobei das mindestens eine des ersten Polymermaterials und des zweiten Polymermaterials ein externes Gleitmittel umfasst und wobei der erste und der zweite Satz rheologischer Eigenschaften eine oder mehrere der folgenden Eigenschaften umfassen (a) den dynamischen Modul, wie durch ein Rotationrheometer gemessen; und (b) die Scherviskosität, wie durch ein Kapillarrheometer gemessen.

2. Polymerextrudat nach einem der vorhergehenden Ansprüche, wobei der erste und der zweite Satz rheologischer Eigenschaften auf eine oder mehrere der folgenden Arten und Weisen verschieden sind:
(a) der dynamische Modul des ersten Polymermaterials und des zweiten Polymermaterials sind dadurch verschieden, dass das Verhältnis des dynamischen Moduls des ersten Polymermaterials zu dem dynamischen Modul des zweiten Polymermaterials mindestens 2:1 beträgt;
(b) die Scherviskosität des ersten Polymermaterials und des zweiten Polymermaterials sind dadurch verschieden, dass das Verhältnis der Scherviskosität des ersten Polymermaterials zu der Scherviskosität des zweiten Polymermaterials mindestens 2:1 beträgt;
(c) der erste und der zweite Normalspannungsunterschied des ersten Polymermaterials und des zweiten Polymermaterials sind dadurch verschieden, dass das Verhältnis des ersten und des zweiten Normalspannungsunterschieds des ersten Polymermaterials zu dem ersten und dem zweiten Normalspannungsunterschied des zweiten Polymermaterials mindestens 2:1 beträgt.

3. Polymerextrudat nach einem der vorhergehenden Ansprüche, wobei das erste Polymermaterial Folgendes aufweist:
(a) einen dynamischen Modul von 100 bis 300.000 Pa;
(b) eine Scherviskosität von 300 bis 10.000 Pa-s;
wobei das zweite Polymermaterial Folgendes aufweist:
(a) einen dynamischen Modul von 1 bis 80.000 Pa;
(b) eine Scherviskosität von 100 bis 1000 Pa-s.

4. Polymerextrudat nach einem der vorhergehenden Ansprüche, wobei das externe Gleitmittel Kohlenwasserstoffwachse, Amidwachse, Polyethylenwachse, oxidierte Polyethylenwachse niedriger und hoher Dichte, Metallstearate oder irgendeine Kombination davon umfasst.

5. Polymerextrudat nach einem der vorhergehenden Ansprüche, wobei das externe Gleitmittel ungesättigtes primäres Amid umfasst, das von Erucasäure, einer komplexen oleochemischen Mischung, die Mono- und Diamide und Metallseife enthält, oder irgendeiner Kombination davon abgeleitet ist

6. Polymerextrudat nach einem der vorhergehenden Ansprüche, wobei das erste Polymermaterial ein Polystyrol umfasst und das zweite Polymermaterial ein Poly(methylmethacrylat) umfasst.

7. Polymerextrudat nach einem der vorhergehenden Ansprüche, wobei das erste Polymermaterial ein thermoplastisches Polyurethan umfasst, das aus einem Diisocyanat und einem Kettenverlängerungsmittel hergestellt ist und das zweite Polymermaterial ein thermoplastisches Polyurethan umfasst, das aus einem Diisocyanat, einem Kettenverlängerungsmittel und einem hydroxylterminierten Zwischenprodukt hergestellt ist.

8. Polymerextrudat nach einem der vorhergehenden Ansprüche, wobei das erste Polymermaterial und/oder das zweite Polymermaterial mindestens ein steifes thermoplastisches Polyurethan umfasst, wobei das steife thermoplastische Polyurethan die folgenden Eigenschaften aufweist:
(i) einen Shore D -Durometer von mindestens 80, wie ASTM D-2240 entsprechend gemessen; und
(ii) einen Weichsegmentgehalt von weniger als 5 Gewichtsprozent.

9. Polymerextrudat nach einem der vorhergehenden Ansprüche, wobei das erste Polymermaterial und/oder das zweite Polymermaterial mindestens ein steifes thermoplastisches Polyurethan umfasst, wobei das steife thermoplastische Polyurethan durch Reagieren mindestens eines Polyisocyanats mit mindestens einem Diolkettenverlängerungsmittel hergestellt wird.

10. Mehrschichtbarrierefilm umfassend: a) eine Masseschicht; und b) einen Mikroschichtabschnitt umfassend das Extrudat nach einem der vorhergehenden Ansprüche.

11. Mehrschichtbarrierefilm nach Anspruch 10, wobei der Mikroschichtabschnitt 10 bis 2000 Mikroschichten umfasst.

12. Mehrschichtbarrierefilm nach Anspruch 10, wobei der Mehrschichtfilm eine zweite Masseschicht umfasst und der Mikroschichtabschnitt zwischen der Masseschicht und der zweiten Masseschicht positioniert ist.

13. Mehrschichtbarrierefilm nach Anspruch 10, wobei die Masseschicht ein oder mehrere olefinische Polymere oder Copolymere, Polyester oder Copolyester, styrolische Polymere oder Copolymere, amidische Polymere oder Copolymere, Polyurethane und Polycarbonate umfasst.

14. Verfahren zur Herstellung eines Polymerextrudats, wobei das Verfahren die Schritte umfasst des:
I. Coextrudierens einer Mehrzahl aneinanderliegender Schichten; und
II. Zusammenfügens der Schichten, um einen Mehrschichtfilm zu bilden;
wobei die Mehrzahl aneinanderliegender Schichten mindestens eine Schicht umfasst, die ein erstes Polymermaterial, das einen ersten Satz rheologischer Eigenschaften aufweist, und mindestens eine Schicht umfasst, die ein zweites Polymermaterial, das einen zweiten Satz rheologischer Eigenschaften aufweist, die von dem ersten Satz rheologischer Eigenschaften verschieden sind, umfasst und wobei der erste und der zweite Satz rheologischer Eigenschaften eine oder mehrere der folgenden Eigenschaften umfassen (a) den dynamischen Modul, wie durch ein Rotationrheometer gemessen; und (b) die Scherviskosität, wie durch ein Kapillarrheometer gemessen;
wobei das mindestens eine des ersten Polymermaterials und des zweiten Polymermaterials ein externes Gleitmittel umfasst.

## Revendications

1. Extrudat polymère comprenant une pluralité de couches de polymère extrudé comprenant une pluralité de couches en alternance d'au moins un premier matériau polymère présentant un premier ensemble de propriétés rhéologiques et un second matériau polymère présentant un second ensemble de propriétés rhéologiques différent du premier ensemble de propriétés rhéologiques;
le au moins un du premier matériau polymère et du second matériau polymère comprenant un lubrifiant externe et le premier et le second ensembles de propriétés rhéologiques comprenant une ou plusieurs des propriétés suivantes (a) le module dynamique, tel que mesuré grâce à un rhéomètre sous rotation; et (b) la viscosité sous cisaillement, telle que mesurée grâce à un rhéomètre capillaire.

2. Extrudat polymère selon l'une quelconque des revendications précédentes, dans lequel le premier et le second ensembles de propriétés rhéologiques sont différents de l'une ou plusieurs des manières suivantes:
(a) le module dynamique du premier matériau polymère et du second matériau polymère sont différents, en ce que le rapport du module dynamique du premier matériau polymère au module dynamique du second matériau polymère est d'au moins 2:1;
(b) la viscosité sous cisaillement du premier matériau polymère et du second matériau polymère sont différentes, en ce que le rapport de la viscosité sous cisaillement du premier matériau polymère à la viscosité sous cisaillement du second matériau polymère est d'au moins 2:1;
(c) la première et la seconde différences normale-contrainte du premier matériau polymère et du second matériau polymère sont différentes, en ce que le rapport de la première et de la seconde différences normale-contrainte du premier matériau polymère aux première et seconde différences normale-contrainte du second matériau polymère est d'au moins 2:1.

3. Extrudat polymère selon l'une quelconque des revendications précédentes, dans lequel le premier matériau polymère présente:
(a) un module dynamique de 100 à 300 000 Pa;
(b) une viscosité sous cisaillement de 300 à 10 000 Pa-s;
où le second matériau polymère présente:
(a) un module dynamique de 1 à 80 000 Pa;
(b) une viscosité sous cisaillement de 100 à 1 000 Pa-s;

4. Extrudat polymère selon l'une quelconque des revendications précédentes, dans lequel le lubrifiant externe comprend des cires d'hydrocarbure, des cires d'amide, des cires de polyéthylène, des cires de polyéthylène oxydées de basse et haute densité, des stéarates de métal, ou n'importe quelle combinaison de ceux-ci.

5. Extrudat polymère selon l'une quelconque des revendications précédentes, dans lequel le lubrifiant externe comprend un amide primaire insaturé dérivé d'acide érucique, un mélange oléochimique complexe contenant des mono et diamides et du savon métallique, ou n'importe quelle combinaison de ceux-ci.

6. Extrudat polymère selon l'une quelconque des revendications précédentes, dans lequel le premier matériau polymère comprend un polystyrène et le second matériau polymère comprend un poly(méthacrylate de méthyle).

7. Extrudat polymère selon l'une quelconque des revendications précédentes, dans lequel le premier matériau polymère comprend un polyuréthane thermoplastique préparé à partir d'un diisocyanate et d'un extenseur de chaîne et le second matériau polymère comprend un polyuréthane thermoplastique préparé à partir d'un diisocyanate, d'un extenseur de chaîne, et d'un intermédiaire terminé par un groupe hydroxyle.

8. Extrudat polymère selon l'une quelconque des revendications précédentes, dans lequel le premier matériau polymère et/ou le second matériau polymère comprend au moins un polyuréthane thermoplastique rigide, ledit polyuréthane thermoplastique rigide présentant les propriétés suivantes:
(i) une valeur au duromètre Shore D d'au moins 80, telle que mesurée selon la norme ASTM D-2240; et
(ii) une teneur en segments souples inférieure à 5 pour cent en poids.

9. Extrudat polymère selon l'une quelconque des revendications précédentes, dans lequel le premier matériau polymère et/ou le second matériau polymère comprend au moins un polyuréthane thermoplastique rigide, ledit polyuréthane thermoplastique rigide étant fabriqué en faisant réagir au moins un polyisocyanate avec au moins un extenseur de chaîne diol.

10. Film formant barrière multicouche comprenant: a) une couche en vrac; et b) une section de microcouche comprenant l'extrudat selon l'une quelconque des revendications précédentes.

11. Film formant barrière multicouche selon la revendication 10, la section microcouche comprenant entre 10 et 2 000 microcouches.

12. Film formant barrière multicouche selon la revendication 10, le film multicouche comprenant une seconde couche en vrac, et ladite section de microcouche étant positionnée entre ladite couche en vrac et ladite seconde couche en vrac.

13. Film formant barrière multicouche selon la revendication 10, la couche en vrac comprenant un ou plusieurs polymères ou copolymères d'oléfine, polyesters ou copolyesters, polymères ou copolymères styréniques, polymères ou copolymères d'amide, polyuréthanes, et polycarbonates.

14. Procédé de fabrication d'un extrudat polymère, ledit procédé comprenant les étapes de:
I. coextrusion d'une pluralité de couches d'adjonction; et
II. fusion desdites couches pour former un film multicouche;
où la pluralité des couches d'adjonction comprend au moins une couche comprenant un premier matériau polymère ayant un premier ensemble de propriétés rhéologiques et au moins une couche comprenant un second matériau polymère ayant un second ensemble de propriétés rhéologiques différent du premier ensemble de propriétés rhéologiques et le premier et le second ensembles de propriétés rhéologiques comprennent une ou plusieurs des propriétés suivantes (a) le module dynamique, tel que mesuré grâce à un rhéomètre sous rotation; et (b) la viscosité sous cisaillement, telle que mesurée grâce à un rhéomètre capillaire;
le au moins un du premier matériau polymère et du second matériau polymère comprenant un lubrifiant externe.
